**Europäisches Patentamt**

**European Patent Office**

**Office européen des brevets**

(19)

(11) Numéro de publication : **0 145 616**
**B1**

(12) # FASCICULE DE BREVET EUROPÉEN

(45) Date de publication du fascicule du brevet :
29.07.87

(51) Int. Cl.⁴ : **G 01 G 21/24**

(21) Numéro de dépôt : **84420184.8**

(22) Date de dépôt : **30.10.84**

(54) **Dispositif assurant le maintien d'un plateau de pesée parallèle à lui-même, sur un appareil de pesage.**

(30) Priorité : **08.11.83 FR 8318073**

(43) Date de publication de la demande :
**19.06.85 Bulletin 85/25**

(45) Mention de la délivrance du brevet :
**29.07.87 Bulletin 87/31**

(84) Etats contractants désignés :
**AT BE CH DE GB IT LI LU NL SE**

(56) Documents cités :
FR-A- 2 102 238
FR-A- 2 505 491
GB-A-   151 626

(73) Titulaire : **Nury Marie Thérèse Veuve Contassot**
**Le Voissant Coublevie**
**F-38500 Voiron-cidex 229 A, Isére (FR)**

**Contassot, Lionel**
**Le Voissant Coublevie**
**F-38500 Voiron-cidex 229 A, Isére (FR)**

(72) Inventeur : **Contassot, Jean-Louis**
**décédé (FR)**

(74) Mandataire : **Bratel, Gérard et al**
**Cabinet GERMAIN & MAUREAU Le Britannia - Tour C**
**20, boulevard E. Deruelle**
**F-69003 Lyon (FR)**

## Description

La présente invention a pour objet un dispositif qui assure le maintien d'un plateau de pesée parallèle à lui-même, sur un appareil de pesage.

Ce dispositif comprend, de manière connue (voir FR-A-2 505 491), au moins deux organes roulants, tels que des cylindres, qui sont superposés et montés chacun entre deux éléments d'appui verticaux situés en vis-à-vis, éléments d'appui dont l'un fait partie d'un bâti-support fixe et dont l'autre est solidaire du plateau de pesée, le bâti-support et l'ensemble mobile verticalement auquel appartient le plateau de pesée se croisant dans leurs parties intermédiaires comprises entre le ou les organes roulants inférieurs et le ou les organes roulants supérieurs, de manière à ce que tous les organes roulants soient appliqués contre les éléments d'appui verticaux correspondants.

Ainsi l'ensemble mobile avec plateau de pesée, recevant la charge à peser, prend appui sur le bâti-support par l'intermédiaire d'organes roulants, tels que des cylindres dont les axes sont horizontaux et superposés, qui le positionnent avec précision et qui lui permettent d'effectuer sa course par un mouvement vertical roulant. Cet ensemble mobile est en outre lié, par suspension, à un système de détermination et d'indication du poids pouvant être de tout type : mécanique, hydraulique, électronique, etc. Il est notamment possible d'utiliser un capteur de force électronique, qui assure la suspension de l'ensemble mobile verticalement en reliant cet ensemble au bâti-support fixe, le capteur étant disposé suivant une direction sensiblement verticale et étant relié au bâti-support et à l'ensemble mobile en des points situés entre les cylindres supérieur et inférieur.

En fonctionnement, les flexions des différentes parties du dispositif sous la charge entraînent alors un certain non-parallélisme des plaques d'appui des cylindres. Ceci introduit une inclinaison de la direction du capteur de force électronique par rapport au plan passant par les axes horizontaux des cylindres supérieur et inférieur. L'inclinaison du capteur entraîne elle-même une modification de la courbe de réponse du capteur et ne permet pas de respecter les tolérances imposées par les services officiels des instruments de mesure.

L'objet de la présente invention est d'éliminer cet inconvénient, en perfectionnant le montage du capteur de force de manière à éviter toute erreur de mesure due aux flexions du dispositif.

A cet effet, dans le dispositif selon la présente invention, le capteur de force assurant la suspension de l'ensemble mobile verticalement a son extrémité supérieure réunie par l'intermédiaire de brides de liaison à un point d'attache situé sur le bâti-support fixe sensiblement au niveau du ou des organes roulants supérieurs, tandis que l'extrémité inférieure du capteur de force est réunie par l'intermédiaire d'autres brides de liaison à un point d'attache situé sur l'ensemble mobile sensiblement au niveau du ou des organes roulants inférieurs.

Grâce à ces dispositions, l'axe longitudinal du capteur de force est maintenu dans le plan contenant les axes horizontaux des cylindres supérieur et inférieur, ce qui supprime toute influence des cylindres, ou autres organes roulants équivalents, sur la précision de la mesure de poids.

Selon un mode de réalisation particulier, l'extrémité supérieure du capteur de force est réunie au moyen d'un premier axe de liaison horizontal à deux brides de liaison supérieures parallèles et situées de part et d'autre du ou des organes roulants supérieurs, le bâti-support fixe comportant deux premiers tourillons de suspension dont chacun est introduit dans un trou correspondant de l'une des brides de liaison supérieures, ces premiers tourillons étant situés sensiblement au niveau du ou des organes roulants supérieurs, tandis que l'extrémité inférieure du capteur de force est réunie au moyen d'un second axe de liaison horizontal à deux brides de liaison inférieures parallèles et situées de part et d'autre du ou des organes roulants inférieurs, l'ensemble mobile comportant deux autres tourillons de suspension dont chacun est introduit dans un trou correspondant de l'une des brides de liaison inférieures, ces autres tourillons étant situés sensiblement au niveau du ou des organes roulants inférieurs.

De toute façon, l'invention sera bien comprise à l'aide de la description qui suit, en référence au dessin schématique annexé représentant, à titre d'exemple non limitatif, une forme d'exécution de ce dispositif assurant le maintien d'un plateau de pesée parallèle à lui-même, sur un appareil de pesage :

Figure 1 est une vue en coupe verticale, très schématique, d'un dispositif conforme à la présente invention ;

Figure 2 est une vue en perspective éclatée de ce dispositif, dans une forme de réalisation particulière.

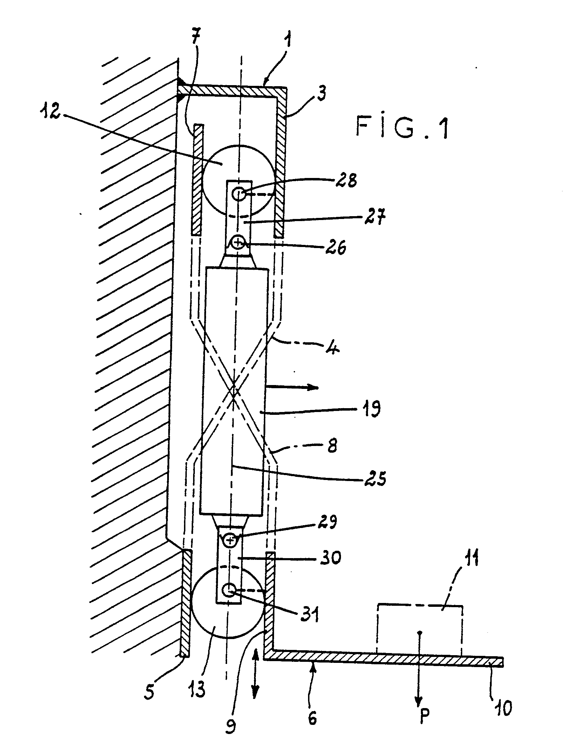

L'appareil de pesage représenté très schématiquement sur la figure 1 comprend un bâti-support fixe (1) avec une première paroi verticale (3) reliée, par une partie intermédiaire oblique (4), à une seconde paroi verticale (5). L'appareil comprend encore un ensemble (6) mobile verticalement, avec une première paroi verticale (7) reliée, par une partie intermédiaire oblique (8), à une seconde paroi verticale (9) solidaire d'un plateau horizontal (10) prévu pour recevoir une charge (11) dont l'appareil détermine le poids (P). Les deux parties intermédiaires obliques (4 et 8) se croisent. Un premier cylindre (12), d'axe horizontal, est disposé entre les deux parois verticales (3 et 7) situées en vis-à-vis, qui appartiennent respectivement au bâti-support (1) et à l'ensemble mobile (6). Un second cylindre (13), d'axe horizontal, est disposé au-dessous du premier entre les deux autres parois verticales (5 et 9) situées en vis-a-vis, qui appartiennent respectivement au bâti-support (1) et à l'ensemble mobile (6). Cet ensemble mobile (6) est suspendu au bâti-support fixe (1) au moyen d'un capteur de force électronique (19), lui-même raccordé à un système indicateur du poids (P) de la charge (11).

La disposition est telle que l'ensemble mobile (6) prend appui sur le bâti-support (1) par l'intermédiaire des deux cylindres (12 et 13), et peut décrire un mouvement vertical relativement au bâti-support (1) avec une course variable suivant le poids (P), les cylindres (12 et 13) roulant sans glissement d'une part sur les parois verticales (3 et 5) du bâti-support (1), d'autre part sur les parois verticales (7 et 9) de l'ensemble mobile (6).

Le capteur de force électronique (19) est disposé avec son axe (25) sensiblement vertical, entre les deux cylindres (12 et 13). Un premier axe de liaison horizontal (26) réunit l'extrémité supérieure du capteur (19) à deux brides de liaison supérieures (27), parallèles et sensiblement verticales, dont les extrémités supérieures sont liées à un point d'attache (28) situé sur le bâti-support fixe (1). D'une manière symétrique, un second axe de liaison horizontal (29) réunit l'extrémité inférieure du capteur (19) à deux autres brides de liaison inférieures (30), parallèles et sensiblement verticales, dont les extrémités inférieures sont liées à un point d'attache (31) situé sur l'ensemble mobile (6).

Le point d'attache (28) des brides (27) sur le bâti-support fixe (1) est situé au niveau du cylindre supérieur (12). De même, le point d'attache (31) des brides (30) sur l'ensemble mobile (6) est situé au niveau du cylindre inférieur (13). Il en résulte que, malgré les flexions du dispositif sous l'effet de la charge (11), l'axe (25) du capteur (19) est toujours contenu dans le plan passant par les axes horizontaux des deux cylindres (12 et 13), ce qui évite des erreurs de mesure.

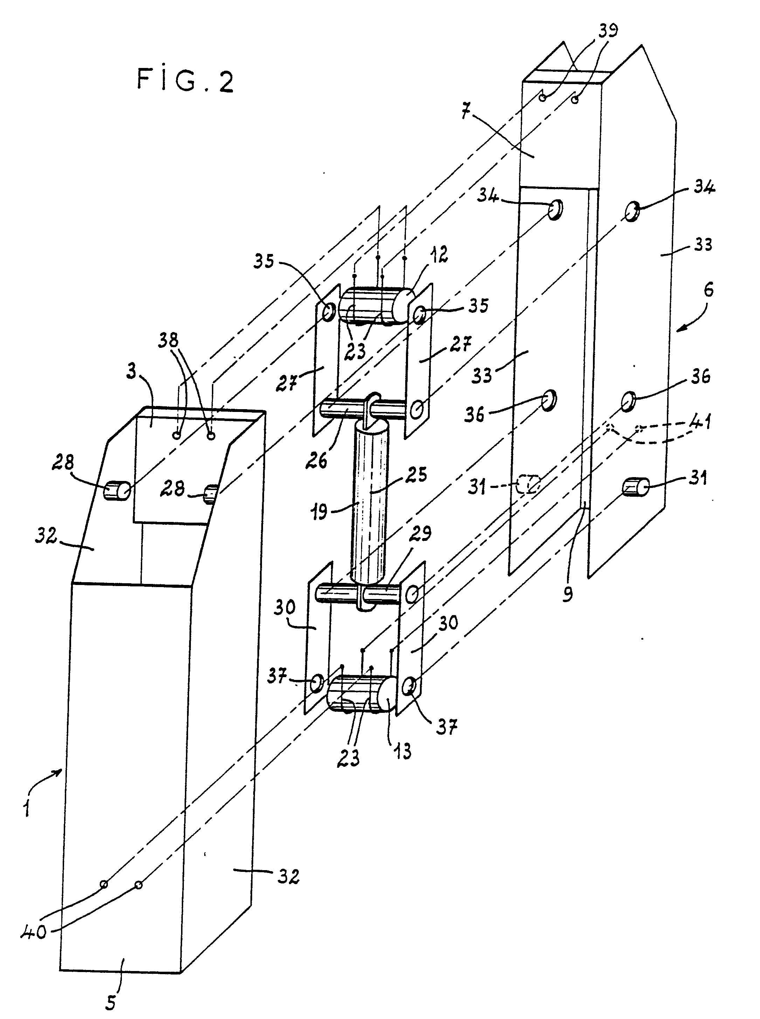

Une réalisation plus particulière du dispositif conçu selon ce principe est illustrée par la figure 2. Le bâti-support fixe (1) se présente ici comme un boîtier, dont les deux faces latérales (32) relient les deux parois verticales (3 et 5) destinées à l'appui des cylindres (12 et 13). L'ensemble mobile (6) se présente également comme un boîtier, introduit à l'intérieur du boîtier précédent formant le bâti-support (1), deux faces latérales (33) reliant ses deux parois verticales (7 et 9) destinées à l'appui des cylindres (12 et 13).

L'axe de liaison supérieur (26) du capteur (19) traverse librement les faces latérales (33) du boîtier (6) qui comportent a cet effet des ouvertures de passage (34). Les deux brides de liaison supérieures (27), situées de part et d'autre du cylindre supérieur (l2), comportent des trous (35) dans chacun desquels est introduit un tourillon (28) faisant saillie du côté intérieur sur une face latérale (32) du boîtier (1).

L'axe de liaison inférieur (29) du capteur (19) traverse librement les faces latérales (33) du boîtier (6) qui comportent à cet effet d'autres ouvertures de passage (36). Les deux brides de liaison inférieures (30), situées de part et d'autre du cylindre inférieur (13), comportent des trous (37) dans chacun desquels est introduit un tourillon (31) faisant saillie du côté extérieur sur une face latérale (33) du boîtier (6).

Ainsi, les brides de liaison (27 et 30) sont disposées dans les espaces ménagés entre les faces latérales respectives (32 et 33) des deux boîtiers (1 et 6).

Les deux premiers tourillons (28) matérialisent le point d'attache supérieur et sont situés à hauteur du cylindre supérieur (12). Celui-ci est retenu par deux lames souples (23) incurvées, dont les extrémités tournées vers le haut sont fixées en des points (38 et 39) respectivement sur le bâti-support fixe (1) et sur l'ensemble mobile (6). Les deux autres tourillons (31) matérialisent le point d'attache inférieur et sont situés à hauteur du cylindre inférieur (13). Celui-ci est également retenu par deux lames souples incurvées (23), dont les extrémités tournées vers le haut sont fixées en des points (40 et 41) respectivement sur le bâti-support fixe (1) et sur l'ensemble mobile (6).

Il est possible de remplacer les cylindres (12 et 13) par tous organes roulants équivalents, tels que les billes ;

réaliser le plateau de pesée (10) sous toute forme, par exemple à la manière d'une fourche dans le cas où le dispositif est monté sur un chariot élévateur pour assurer le pesage de la charge soulevée par le chariot ;

grouper deux ou plusieurs dispositifs similaires, sur un même appareil de pesage.

**Revendications**

1. Dispositif assurant le maintien d'un plateau de pesée parallèle à lui-même, sur un appareil de pesage, ce dispositif comprenant au moins deux organes roulants, tels que des cylindres (12, 13), qui sont superposés et montés chacun entre deux éléments d'appui verticaux (3, 5, 7, 9) situés en vis-à-vis, éléments d'appui dont l'un (3, 5) fait partie d'un bâti-support fixe (1) et dont l'autre (7, 9) est solidaire du plateau de pesée (10), le bâti-support (1) et l'ensemble mobile verticalement (6) auquel appartient le plateau de pesée (10) se croisant dans leurs parties intermédiaires (4, 8) comprises entre le ou les organes roulants inférieurs (13) et le ou les organes roulants supérieurs (12), de manière à ce que tous les organes roulants (12, 13) soient appliqués contre les éléments d'appui verticaux correspondants (3, 5, 7, 9), caractérisé en ce qu'un capteur de force (19) assurant la suspension de l'ensemble mobile verticalement (6) a son extrémité supérieure réunie par l'intermédiaire de brides de liaison (27) à un point d'attache (28) situé sur le bâti-support fixe (1) sensiblement au niveau du ou des organes roulants supérieurs (12), tandis que l'extrémité inférieure du capteur de force (19) est réunie par l'intermédiaire d'autres brides de liaison (30) à un point d'attache (31) situé sur l'ensemble mobile (6) sensiblement au niveau du ou des organes roulants inférieurs (13).

2. Dispositif selon la revendication 1, caractérisé en ce que l'extrémité supérieure du capteur de force (19) est réunie au moyen d'un premier axe de liaison horizontal (26) à deux brides de liaison supérieures (27) parallèles et situées de part et d'autre du ou des organes roulants supérieurs (12), le bâti fixe (1) comportant deux premiers tourillons de suspension (28) dont chacun est introduit dans un trou correspondant (35) de l'une des brides de liaison supérieures (27), ces premiers tourillons (28) étant situés sensiblement au niveau du ou des organes roulants supérieurs (12), tandis que l'extrémité inférieure du capteur de force (19) est réunie au moyen d'un second axe de liaison horizontal (29) à deux brides de liaison inférieures (30) parallèles et situées de part et d'autre du ou des organes roulants inférieurs (13), l'ensemble mobile (6) comportant deux autres tourillons de suspension (31) dont chacun est introduit dans un trou correspondant (37) de l'une des brides de liaison inférieures (30), ces autres tourillons (31) étant situés sensiblement au niveau du ou des organes roulants inférieurs (13).

3. Dispositif selon la revendication 2, caractérisé en ce que le bâti-support fixe (1) et l'ensemble mobile (6) se présentent comme des boîtiers dont le second est introduit à l'intérieur du premier, les faces latérales (33) du boîtier de l'ensemble mobile (6) comportant des ouvertures de passage (34, 36) traversées librement par les axes de liaison (26, 29) réunissant le capteur de force (19) aux brides de liaison (27, 30) disposées entre les deux boîtiers, les deux premiers tourillons (28) faisant saillie intérieurement sur les faces latérales (32) du boîtier du bâti-support (1) tandis que les deux autres tourillons (31) font saillie extérieurement sur les faces latérales (33) du boîtier de l'ensemble mobile (6).

**Claims**

1. À device for holding a weighing platform in parallel to itself, on a weighing apparatus, the device including at least two rolling members, such as cylinders (12, 13), which are superposed and each mounted between two vertical bearing elements (3, 5, 7, 9) located opposite to one another, one of which bearing elements (3, 5) forms part of a fixed supporting frame (1), the other (7, 9) being rigid with the weighing platform (10), the supporting frame (1) and the vertically movable assembly (6), to which the weighing platform (10) belongs, intersecting in their intermediate portions (4, 8) comprised between the lower rolling member or members (13) and the upper rolling member or members (12), in such a way that all the rolling members (12, 13) are applied against the corresponding vertical bearing elements (3, 5, 7, 9), characterised in that a force measuring device (19) ensuring the suspension of the vertically movable assembly (6), has its upper end joined by means of connecting ties (27) to a fastening point (28) located on the fixed supporting frame (1) substantially at the level of the upper rolling member or members (12), whilst the lower end of the force measuring device (19) is joined by means of other connecting ties (30) to a fastening point (31) located on the movable assembly (6) substantially at the level of the lower rolling member or members (13).

2. A device according to Claim 1, characterised in that the upper end of the force measuring device (19) is joined by means of a first horizontal connecting shaft (16) to two parallel upper connecting ties (27) located at either side of the upper rolling member or members (12), the fixed frame (1) having two first suspension pivots (28), each of which is introduced into a corresponding hole (35) in one of the upper connecting ties (27), these first pivots (28) being located substantially at the level of the upper rolling member or members (12), whilst the lower end of the force measuring device (19) is joined by means of a second horizontal connecting shaft (29) to two parallel lower connecting ties (30) located at either side of the lower rolling member or members (13), the movable assembly (6) having two other suspension pivots (31) each of which is introduced into a corresponding hole (37) in one of the lower connecting ties (30), these other pivots (31) being located substantially at the level of the lower rolling member or members (13).

3. A device according to Claim 2, characterised in that the fixed supporting frame (1) and the movable assembly (6) are in the form of casings, the second of which is introduced within the first, the lateral faces (33) of the casing of the movable assembly (6) having openings (34, 36) through which the connecting shafts (26, 29) freely pass, joining the force measuring device (19) to the connecting ties (27, 30) disposed between the two casings, the two first pivots (28) projecting internally from the lateral faces (32) of the casing of the supporting frame (1), whilst the two other pivots (31) project externally from the lateral faces (33) of the casing of the movable assembly (6).

**Patentansprüche**

1. Gerät zum Halten des Wiegeplateaus parallel zu sich selbst, auf einer Wiegevorrichtung, wobei das Gerät mindestens zwei Rollorgane, wie Zylinder (12, 13), beinhaltet, die übereinander und jeder zwischen zwei vertikalen Stützelementen (3, 5, 7, 9), die einander gegenüberliegen, angeordnet sind, Stützelemente, von denen die einen (3, 5) Teil eines ortsfesten Gestellsupportes (1) sind, während die anderen (7, 9) fest mit dem Wiegeplateau (10) verbunden sind, wobei sich der Gestellsupport (1) und die vertikalbewegliche Baugesamtheit (6), zu der das Wiegeplateau (10) gehört, sich in ihren Zwischenbereichen (4, 5), die zwischen dem oder den unteren (13) und dem oder den oberen Rollorganen (12) liegen, kreuzen, derart, daß alle Rollorgane (12, 13) gegen die korrespondierenden vertikalen Stützelemente (3, 5, 7, 9) angedrückt sind, dadurch gekennzeichnet, daß ein die Aufhängung der vertikalbeweglichen Baugesamtheit (6) gewährleistendes Kraftmeßgerät (19) sein oberes Ende mittels Verbindungsflanschen (27) mit einem Befestigungspunkt (28) verbunden hat, der an dem ortsfesten Gestellsupport (1) genau im Niveau des oder der oberen Rollorgane (12) liegt, während das untere Ende des Kraftmeßgerätes (19) mittels anderer Verbindungsflansche (30) mit einem Befestigungspunkt (31) verbunden ist, der auf der beweglichen Baugesamtheit (6) genau im Niveau des oder der unteren Rollorgane (13) liegt.

2. Gerät nach Anspruch 1, dadurch gekennzeichnet, daß das obere Ende des Kraftmeßgerätes (19) mittels einer ersten horizontalen Verbindungsachse (26) mit zwei oberen Verbindungsflanschen (27) verbunden ist, die parallel zueinander und zu beiden Seiten des oder der oberen Rollorgane (12) liegen, wobei das ortsfeste Gestell (1) zwei erste Aufhängezapfen (28) aufweist, von denen jeder in ein entsprechendes Loch (35) eines der beiden oberen Verbindungsflansche (27) eingesteckt ist, wobei diese ersten Zapfen (28) genau im Niveau des oder der oberen Rollorgane (12) liegen, während das untere Ende des Kraftmeßgerätes (19) mittels einer zweiten horizontalen Verbindungsachse (29) mit zwei unteren Verbindungsflanschen (30) verbunden ist, die parallel zueinander und zu beiden Seiten des oder der unteren Rollorgane (13) liegen, wobei die bewegliche Baugesamtheit (6) zwei weitere Aufhängezapfen (31) trägt, von denen jeder in ein entsprechendes Loch (37) eines der beiden unteren Verbindungsflansche (30) eingesteckt ist, wobei diese weiteren Zapfen (31) genau im Niveau des oder der unteren Rollorgane (13) liegen.

3. Gerät nach Anspruch 2, dadurch gekennzeichnet, daß der ortsfeste Gestellsupport (1) und die bewegliche Baugesamtheit (6) als Gehäuse ausgebildet sind, deren zweites in das Innere des ersten eingeführt ist, wobei die seitlichen Flächen (33) des Gehäuses der beweglichen Baugesamtheit (6) Durchtrittsöffnungsn (34, 36) aufweisen, die frei von den Verbindungsachsen (26, 29) durchquert sind, die das Kraftmeßgerät (29) mit den zwischen diesen Gehäusen angeordneten Verbindungsflanschen (27, 30) verbinden, wobei die beiden ersten Zapfen (28) nach innen über die seitlichen Flächen (32) des Gehäuses des Gestellsupportes (1) vorspringen, während die beiden anderen Zapfen (31) nach außen über die seitlichen Flächen (33) des Gehäuses der beweglichen Baugesamtheit (6) vorspringen.

FIG. 1

# FIG.2